# EUROPEAN PATENT APPLICATION

(11) **EP 1 513 136 A1**
(43) Date of publication of application: **09.03.2005**
(21) Application number: 04254257.1
(22) Date of filing: 15.07.2004
(51) Int. Cl.: G10L 15/26, G10L 17/00

(54) **Audio/video apparatus and method for providing personalized services through voice and speaker recognition**

(30) Priority: 03.09.2003 KR 2003061511
(71) Applicant: Samsung Electronics Co., Ltd., Suwon-si, Gyeonggi-do (KR)
(72) Inventor: Choi, Seung-eok, 4-B01 Kkonmaeul Residence, Seoul (KR); Chung, Sun-wha, 506-504 LG Vilage 5-cha, Yongin-si, Gyeonggi-do (KR); Myung, In-sik, Incheon (KR); Lee, Jung-bon, Gangnam-gu, Seoul (KR)
(74) Representative: Brandon, Paul Laurence

(57) **Abstract**

Disclosed is an audio/video apparatus (200) for providing personalized services to a user through voice and speaker recognition, wherein when the user inputs his/her voice through a wireless microphone of a remote control (100), the voice recognition and speaker recognition for the input voice are performed and determination on a command corresponding to the input voice is made, thereby providing the user's personalized services to the user. Further, disclosed is a method for providing personalized services through voice and speaker recognition, comprising the steps of inputting, by a user, his/her voice through a wireless microphone of a remote control (100); if the voice is input, recognizing the input voice and the speaker that has input the voice; determining a command based on the input voice; and providing a service according to the determination results.

## Description

The present invention relates to audio/video (A/V) apparatus and methods for providing personalized services through voice and speaker recognition, and more particularly, though not exclusively, to A/V apparatus and methods for providing personalized services through voice and speaker recognition, wherein upon input of a user's voice, both voice recognition and speaker recognition are simultaneously performed to provide personalized services depending on recognition of the speaker.

In the related art, in order to receive personalized services, a user should select a speaker recognition mode, then speak an already registered password (input word) for user recognition, and finally speak a relevant command for a desired service.

This may be inconvenient since a user can only receive personalized services by performing two processes, including the process of inputting a password for speaker recognition and the process of inputting a command for voice recognition. In addition, since an input word (password) for speaker recognition and an input word (command) for voice recognition are applied separately, the user should memorize the respective input words which is also inconvenient

Moreover, if another user intends to enjoy personalized services, the "Change User" command should be input and then speaker and voice recognition should be performed again, causing an inconvenience to the user.

An aim of preferred embodiments of the present invention is to provide an A/V apparatus and method for providing personalized services through voice and speaker recognition, wherein upon input of a user's voice, both voice and speaker recognition are simultaneously performed without requiring a separate, user recognition process.

Another aim of preferred embodiments of the present invention is to provide an A/V apparatus and method for providing personalized services through voice and speaker recognition, wherein desired services can be quickly provided by equally applying input words (commands) to voice recognition and speaker recognition.

According to a first aspect of the present invention, there is provided an audio/video apparatus for providing personalized services to a user through voice and speaker recognition, wherein when the user inputs his/her voice through a wireless microphone of a remote control, the voice recognition and speaker recognition for the input voice are performed and determination on a command corresponding to the input voice is made, thereby providing the user's personalized services to the user.

Further, the A/V apparatus may comprise a voice recognition unit for recognizing the voice input through the voice input unit; a speaker recognition unit for recognizing the user based on the voice input through the voice input unit; a determination unit for determining which command corresponds to the voice recognized by the voice recognition unit; a database for storing user information, voice information, information on the user's personalized services, and commands; and a service search unit for searching for a service corresponding to the recognized command and the information on the user's personalized service, in the database.

Moreover, according to a second aspect of the present invention, there is provided a method for providing personalized services through voice and speaker recognition, comprising the steps of inputting, by a user, his/her voice through a wireless microphone of a remote control; if the voice is input, recognizing the input voice and the speaker that has input the voice; determining a command based on the input voice; and providing a service according to the determination results.

Further features of the present invention are set out in the appended claims.

The present invention will become apparent from the following description of preferred embodiments, by way of example only, given in conjunction with the accompanying drawings, in which:
Figure 1 is a block diagram schematically showing an A/V apparatus for providing personalized services through voice and speaker recognition according to an exemplary embodiment of the present invention;
Figure 2 is a flowchart schematically illustrating a method for providing personalized services through voice and speaker recognition according to another exemplary embodiment of the present invention;
Figures 3A and 3B show command tables according to an embodiment of the present invention;
Figure 4 illustrates the method for providing personalized services through voice and speaker recognition according to an exemplary embodiment of the present invention; and
Figure 5 illustrates the method for providing personalized services through voice and speaker recognition according to another exemplary embodiment of the present invention.

Hereinafter, exemplary embodiments of the present invention will be described in detail with reference to the accompanying drawings.

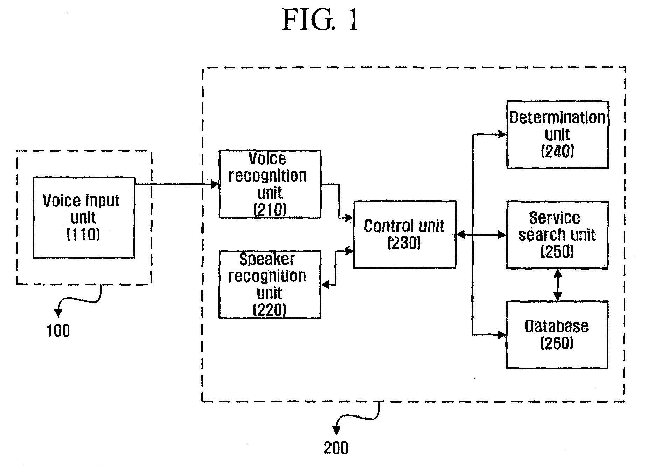

Figure 1 is a block diagram schematically showing an A/V apparatus for providing personalized services through voice and speaker recognition according to an exemplary embodiment of the present invention. The A/V apparatus 200 comprises a voice recognition unit 210, a speaker recognition unit 220, a control unit 230, a determination unit 240, a service search unit 250 and a database 260.

Upon input of a user's voice through a wireless microphone of a remote control 100, the A/V apparatus 200 performs voice and speaker recognition for the input voice, determines a command corresponding to the input voice and then provides a personalized service to the user.

The voice recognition unit 210 is adapted to recognize a voice input through a voice input unit 110 provided in the remote control 100, i.e. to recognize a command input by a user.

The speaker recognition unit 220 is adapted to recognize a speaker based on a voice input through the voice input unit 110, i.e. to recognize a user who has input his/her voice based on information on users' voices stored in the database 260.

The determination unit 240 is adapted to determine which command corresponds to a voice recognized by the voice recognition unit 210, i.e. to analyze the command recognized by the voice recognition unit 210 and determine whether the command requires user information.

The database 260 is adapted to store information on users, voices and personalized services for users, and available commands. In other words, the database provides commands and information on a relevant user that have been stored therein, when the voice recognition unit 210 and the speaker recognition unit 220 perform an authentication process. Here, the available commands mean all commands that can be input by users, for example, including the "Search Channel" command, "Register Channel" command, "Delete Channel" command, and the like.

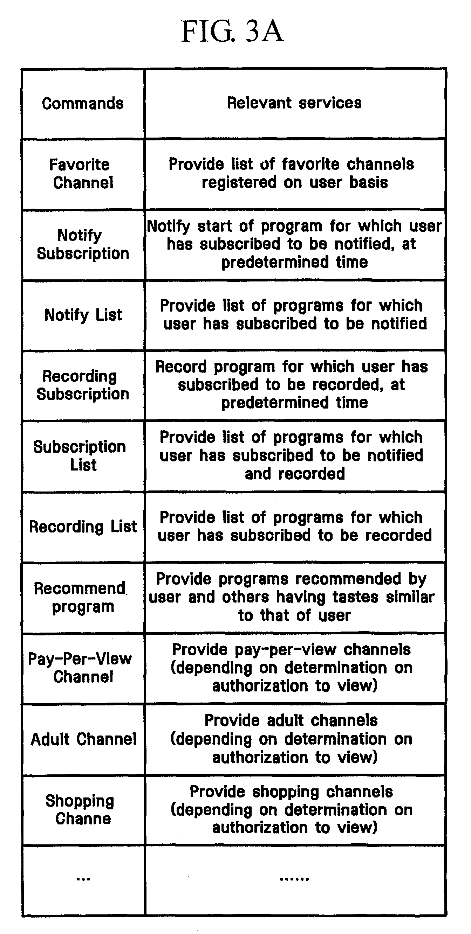

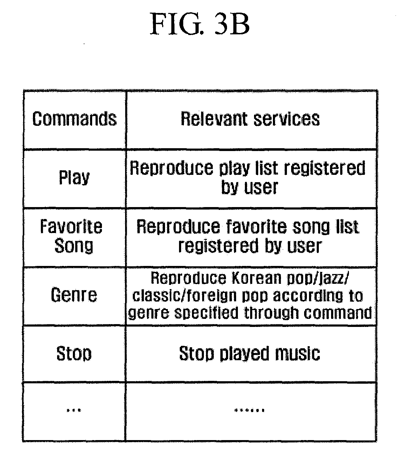

Further, commands are classified into commands that require user authentication and commands that do not require user authentication. The commands stored in the database 260 will be described later in greater detail with reference to Figure 3.

The service search unit 250 is adapted to search for information related to a command and information on personalized services for a user in the database 260 depending on the determination results of the determination unit 240, i.e. to search for a relevant service depending on the determination results of the determination unit 240.

The control unit 230 is adapted to provide a service searched by the service search unit 250, i.e. to provide a service corresponding to a command input by a user. Here, the service can be considered the display of a broadcast program from a favourite channel, the display of information on a recommended program, the reproduction of a favourite piece of music, the display of the genre of selected piece of music, or the like.

Meanwhile, a user's voice is input through the voice input unit 110 provided in the remote control 100. At this time, a wireless microphone is used for the input of the user's voice.

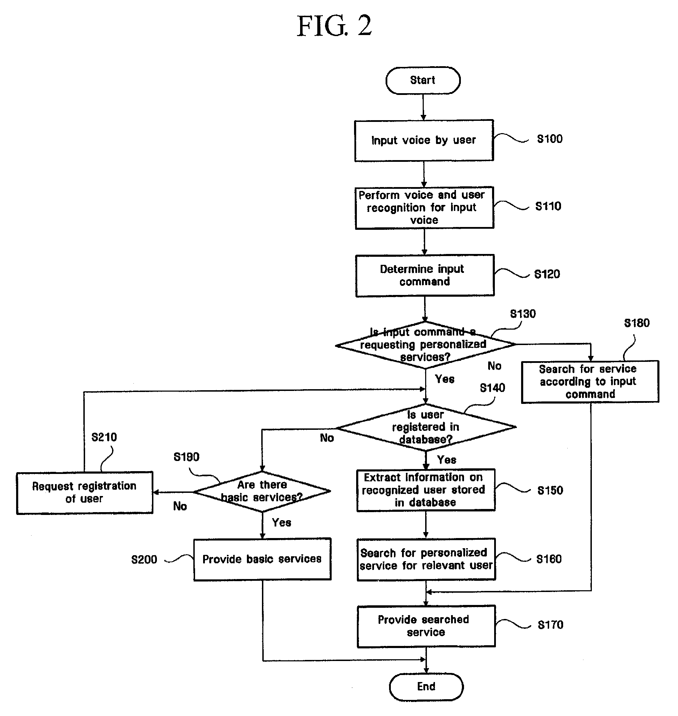

Figure 2 is a flowchart schematically illustrating a method for providing personalized services through voice and speaker recognition according to another exemplary embodiment of the present invention. First, if a user inputs his/her voice through the wireless microphone installed in the remote control (S100), the voice input unit 110 transmits the user's voice (command), which has been input through the wireless microphone, to the voice recognition unit 210.

Then, the voice recognition unit 210 recognizes the command transmitted from the voice input unit 110, and the speaker recognition unit 220 simultaneously performs speaker recognition based on the input voice (S110). In other words, the voice recognition unit 210 recognizes the command input by the user, and at the same time, the speaker recognition unit 220 performs speaker recognition for the user based on the input voice. Specifically, the voice recognition unit 210 converts the input command into text and transmits the text to the determination unit 240, and the speaker recognition unit 220 extracts features from the input voice, analyzes the extracted features, and then searches for a user's voice with a voice signal closest to that of the input voice among users' voices stored in the database 260, thereby recognizing the user that has input the command. Here, the user should perform in advance a user registration process in preparation for speaker recognition. Specific information on the user is registered in the database 260 through the user registration process. As a result, speaker recognition based on voices can be performed. Further, registered words that have already been registered in the database 260 comprise commands requesting personalized services. Thus, the registered words and the commands are equally applied so that both voice and speaker recognition can be performed simultaneously.

Thereafter, the command recognized by the voice recognition unit 210 is transmitted to the determination unit 240 which in turn analyzes the command recognized by the voice recognition unit 210 (S120). In other words, the determination unit 240 analyzes which operation will be performed based on the input command, and determines whether the analyzed command is a personalized command for a user requiring user information or a general command not requiring user information. Here, the personalized command for a user is a command frequently input by a user according to his/her preference and taste, and may be considered "Favorite Channel," "Notify Subscription," "Notify List," "Recording Subscription," "Subscription List," "Recording List," "Recommend Program," "Pay-Per-View channel," "Shopping Channel," or the like. The general command is a command without reflection of user's preference and taste, and may be considered news, dramas, sports, or the like.

Subsequently, if it is determined by the determination unit 240 that the input command is a command requesting a personalized service (S130), the service search unit 250 determines whether a user that has input his/her voice is a user that has been registered in the database 260 and recognized through speaker recognition by the speaker recognition unit 220 (S140).

If it is determined that the user that has input his/her voice is a user that has been registered in the database 260 (S140), information on the user authenticated by the speaker recognition unit 220 is searched for and extracted from the database 260 where information is registered on a user basis (S150). Thereafter, a personalized service corresponding to the command input by the user is searched for in a list of services contained in the extracted user information (S160).

Then, the control unit 230 provides the user with the personalized service searched by the service search unit 250 (S170).

On the other hand, if it is determined that the user that has input his/her voice is not a user registered in the database 260 (S140), the service search unit 250 provides the user with basic services basically configured in the A/V apparatus (S190, S200), or notifies the user that there are no registered personalized services for the user and requests the user to perform the user registration process (S210). Here, the basic services are services that have been configured as default in the A/V apparatus and will be provided if the user that has input his/her voice has not yet gone through user registration for personalized services and thus there are no personalized services to be provided to the user. In other words, the basic services are services to be provided temporarily to a user that has not yet been registered in the database 260. For example, if the user inputs "Recommend Program" command, the determination unit 240 analyzes the input command. Based on the analysis results, the determination results that the command input by the user is a command requesting a personalized service are transmitted to the service search unit 250 which in turn determines whether the user that has input his/her voice is a user registered in the database 260.

Then, if it is determined that the user that has input the command ("Recommend Program") is a user that has not been registered in the database 260, the user is provided with a basic service (e.g., "MBC 9 O'clock News" program) configured as default in the A/V apparatus, since there is no personalized services to be provided to the user.

On the other hand, if it is determined by the determination unit 240 that the input command is a command requesting a general service (S130), the service search unit 250 searches the database 260 to find a general service corresponding to the input command (S180). Then, the control unit 230 provides the user with the general service searched by the service search unit 250 (S170).

Meanwhile, if another user inputs a command through the wireless microphone installed in the remote control, voice and speaker recognition for the user are performed and a personalized service according to searched information on the user is provided to the user.

Figures 3a and 3b show personalized command tables according to the present invention. Figure 3a shows a table of personalized commands that can be input upon use of a video device (digital TV), and Figure 3b shows a table of personalized commands that can be input upon use of an audio device (audio component, MP3 player, multimedia player or the like).

First, referring to Figure 3A, the table of personalized commands that can be input upon use of a video device will be described.

"Favorite Channel" is configured to provide one of channels registered in the database 260 by the user as his/her favorite channels. That is, if the user speaks "Favorite Channel" as a command, pictures from one of the favorite channels stored in the database 260 are displayed on a screen.

"Notify Subscription" is configured such that the user is notified of the start of a broadcast of an arbitrary program about which the user wants to receive notification, before (or after) the start thereof. That is, if a user subscribes for/inputs information (broadcast time, channel information, program's title, etc) on a specific program, the user is notified of the start of the specific program.

"Notify List" is a list for registering and maintaining, in the database 260, lists of programs for which the user has subscribed to be notified of the start thereof. That is, if the user speaks "Notify List" as a command, registered "Notify List" is displayed on the screen. Here, the manipulation and processing of the list may be made according to user's needs.

"Recording Subscription" is configured such that the user subscribes for the recording of a program that he/she wants to view. That is, if the user inputs information (broadcast time, channel information, program's title, etc) on the program, a broadcast of the program will be recorded from a set time.

"Subscription List" is a list for registering and maintaining, in the database 260, lists of programs for which the user has subscribed to be recorded and notified. That is, if the user speaks "Subscription List" as a command, a registered "Subscription List" is displayed on the screen. Here, the manipulation and processing of the list may be made according to user's needs.

"Recording List" is a list for registering and maintaining lists of recorded programs in the database 260. That is, if the user speaks "Recording List" as a command, a registered "Recording List" is displayed on the screen. Here, the reproduction or deletion of the programs may be made according to user's needs.

"Recommend Program" is configured in such a manner that the user receives information on programs, which have been recommended by the user and other users having tastes similar to that of the user, from content providers or broadcast stations, and registers the information. That is, if the user speaks "Recommend Program" as a command, the user is provided with the recommended programs and the information thereon.

"Pay-Per-View Channel" is configured to determine whether the user has been authorized to view a pay-per-view channel, according to user's personal information through user identification (speaker recognition), and to provide allowed information to the user, upon searching for or viewing the pay-per-view channel.

"Adult Channel" is configured to determine whether the user has been authorized to view an age-restricted channel, according to user's personal information through user identification (speaker recognition), and to provide relevant information to the user only when the user is an authorized user, upon searching for or viewing an age-restricted channel.

"Shopping Channel" is configured to determine whether the user has been authorized to perform TV commercial transactions, according to user's personal information through user identification (speaker recognition), and to provide relevant information to the user only when the user is an authorized user, upon making the TV commercial transactions.

Next, referring to Figure 3B, the table of personalized commands that can be input upon use of an audio device will be described.

"Play" is configured to reproduce songs in a personalized song list through user identification (speaker recognition) according to profile information of the user that has spoken the command. In other words, if the user speaks "Play" as a command, the songs registered in the list are reproduced.

"Select by Genre" is configured to provide services personalized by genres such as Korean pop, jazz, classic and foreign pop. Specifically, if the user speaks one of a plurality of genres (e.g., "Korean pop") as a command, pieces of music of the genre (Korean pop) are reproduced. "Favorite Song List" is a list of user's favorite songs registered in the database 260. That is, if the user speaks "Favorite Song List" as a command, the registered favorite songs are reproduced.

Meanwhile, the user can input and register other commands in addition to the aforementioned commands.

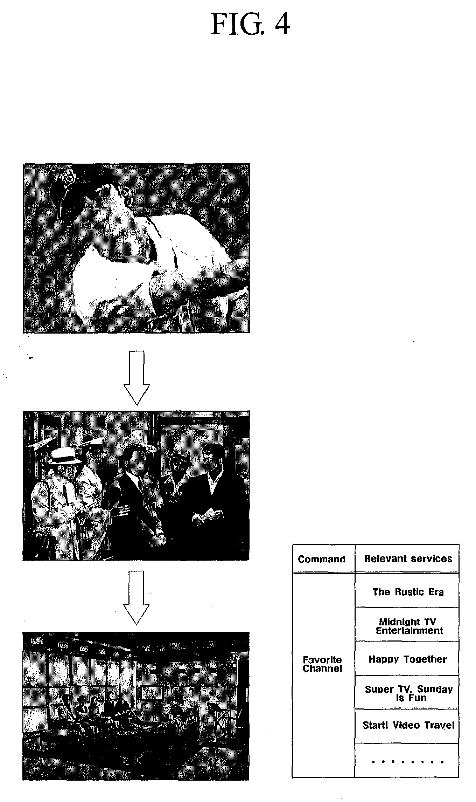

Figure 4 illustrates the method for providing personalized services through the voice and speaker recognition according to an exemplary embodiment of the present invention. First, if a user speaks "Favorite Channel" against a wireless microphone installed in a remote control while watching a sport news channel, the voice input unit 110 transmits the command, "Favorite Channel," input by the user to the voice recognition unit 210.

Then, the voice recognition unit 210 recognizes the input command, "Favorite Channel," and at the same time, the speaker recognition unit 220 performs speaker recognition based on the input voice.

Subsequently, the voice recognition unit 210 forwards the input command ("Favorite Channel") to the determination unit 240 which in turn analyzes the forwarded command. Here, the determination unit 240 analyzes the command, and informs the service search unit 250 of the fact that the forwarded command is a command corresponding to "Favorite Channel" and the analyzed command, "Favorite Channel," is a personalized command requiring user information.

In response thereto, the service search unit 250 extracts information on a user recognized by the speaker recognition unit 220 from the database 260, and searches for a list for "Favorite Channel" among service lists contained in the extracted user information.

Then, the control unit 230 provides one of the searched favorite channels (for example, "The Rustic Era") to the user.

Meanwhile, if the user speaks "Favorite Channel" as a command once again while watching "The Rustic Era," the channel is changed to "Midnight TV Entertainment" having a number closest to that of "The Rustic Era" in the favorite channel list (see the table shown in Figure 4).

Further, if the user speaks "down" (or "up") as a command while watching "The Rustic Era," the channel is changed to "Midnight TV Entertainment" registered therebelow.

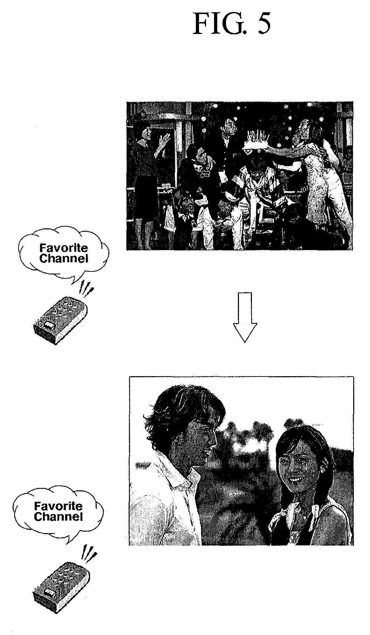

Figure 5 illustrates the method for providing personalized services through voice and speaker recognition according to another exemplary embodiment of the present invention, wherein a plurality of users are provided with desired channel services through voice input.

First, if a user speaks "Favorite Channel" into a wireless microphone installed in a remote control while watching TV, the voice recognition unit 210 and the speaker recognition unit 220 perform voice recognition and speaker recognition in response to the input command, "Favorite Channel."

Then, the determination unit 240 analyzes the input command to determine what service is desired by the user, and informs the service search unit 250 of the determination results that the input command is "Favorite Channel" requesting personalized services.

In response thereto, the service search unit 250 searched for a list for "Favorite Channel" among service lists for the user stored in the database 260 and provides one of the favorite channels (e.g., "Gag Concert") to the user.

Thereafter, if another user speaks "Favorite Channel" into the wireless microphone installed in the remote control, the voice recognition unit 210 and the speaker recognition unit 220 perform voice recognition and speaker recognition based on the input command, "Favorite Channel." At this time, it is determined through the speaker recognition that the user that has input the command is not the same user.

Then, the determination unit 240 analyzes the command input by the user and transmits the analysis results back to the service search unit 250, and the service search unit 250 searches for a list for "Favorite Channel" among service lists for the user stored in the database 260 and provides one of the favorite channels (e.g., "Summer Scent") to the user.

As a further exemplary embodiment of the present invention, a case where a user listens to music through audio components will be described below. First, if the user speaks "Jazz" as a command into a wireless microphone installed in a remote control, the voice input unit 110 transmits the command, "Jazz," input by the user to the voice recognition unit 210.

Then, the voice recognition unit 210 recognizes the input command, "Jazz," and at the same time, the speaker recognition unit 220 performs speaker recognition for the user based on the input voice.

Subsequently, the voice recognition unit 210 forwards the input command ("Jazz") to the determination unit 240 which in turn analyzes the forwarded command. At this time, the determination unit 240 analyzes the command ("Jazz") and forwards the analysis results to the service search unit 250.

In response thereto, the service search unit 250 extracts information on the user recognized by the speaker recognition unit 220 from the database 260, and searches for and reproduces pieces of music of jazz among the genres of music contained in the extracted user information.

According to a preferred embodiment of the present invention described above, there is an advantage in that when a user inputs his/her voice through a wireless microphone, both voice and speaker recognition are performed simultaneously, thereby searching for personalized services without performing a separate user identification process, and quickly providing desired services to the user.

Further, there is another advantage in that since input words (commands) can be equally applied to both voice and speaker recognition, a user is not required to memorize the input words for user authentication and it is not necessary to separately provide devices for voice and speaker recognition.

Although the present invention has been described in connection with the preferred embodiments, it will be apparent that those skilled in the art can make various modifications and changes thereto without departing from the spirit and scope of the present invention defined by the appended claims. Therefore, simple changes to the embodiments of the present invention fall within the scope of the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An audio/video apparatus (200) for providing personalized services to a user through voice and speaker recognition, comprising:
a voice recognition unit (210) for recognizing a voice command;
a speaker recognition unit (220) for recognizing the user based on the voice command;
wherein when the user inputs the voice command, voice recognition and speaker recognition for the voice command are performed.

2. The apparatus as claimed in claim 1, wherein said voice command is input into a remote control (100) having a voice input unit for receiving the voice command.

3. The apparatus as claimed in claim 1 or claim 2, further comprising:
a determination unit (240) for determining which action corresponds to the voice command recognized by the voice recognition unit (210).

4. The apparatus as claimed in any preceding claim, further comprising:
a database (260) for storing user information, voice information, information on the user's personalized services, and actions; and
a service search unit (250) for searching for a service corresponding to the recognized voice command and the information on the user's personalized service, in the database (260).

5. The apparatus as claimed in any preceding claim, wherein both the voice and speaker recognition for the user are performed simultaneously.

6. The apparatus as claimed in any preceding claim, wherein the same voice command is used by both the voice recognition unit and the speaker recognition unit.

7. A method for providing personalized services through voice and speaker recognition, comprising:
inputting, by a user, a voice command;
recognizing the voice command and the user that has input the voice command;
determining an action to be performed based on the voice command; and
performing a service according to the determined action.

8. The method as claimed in claim 7, wherein determining the action based on the voice command comprises:
determining which action corresponds to the voice command;
searching for a relevant service using service information for users stored in a database if it is determined that the action is requesting personalized services; and
searching for a service according to the voice command if it is determined that the action is not requesting personalized services.

9. The method as claimed in claim 7 or claim 8, wherein the actions for use in the voice and speaker recognition are equally applied.

10. The method as claimed in any one of claims 7 - 9, wherein said voice command is input into a wireless microphone of a remote control (100).

11. The method as claimed in any one of claims 7 - 10, wherein recognizing the voice command and user are performed simultaneously.

12. The method as claimed in any one of claims 7 - 11, wherein the same voice command is used for recognizing both the voice command and the user.
